# EUROPEAN PATENT SPECIFICATION

(11) **EP 4 017 318 B1**
(45) Date of publication and mention of the grant of the patent: **25.06.2025**
(21) Application number: 20854823.0
(22) Date of filing: 12.08.2020
(51) Int. Cl.: A47B 3/02, A47B 9/16, D06F 81/00, A47B 3/00, A47B 3/08, A47B 9/00, A47B 9/20

(54) **COLLAPSIBLE ADJUSTABLE HEIGHT TABLE**
ZUSAMMENKLAPPBARER HÖHENVERSTELLBARER TISCH
TABLE PLIANTE À HAUTEUR RÉGLABLE

(30) Priority: 19.08.2019 US 201962888725 P; 21.02.2020 US 202062979586 P
(43) Date of publication of application: 29.06.2022
(73) Proprietor: Evo Inventions LLC, Newark DE 19713 (US)
(72) Inventor: LUNDIN, Christopher, Newark, Delaware 19711 (US); AAMODT, Evan Einbender, Philadelphia, Pennsylvania 19104 (US); DOTSEY, Michael A., Chester Springs, Pennsylvania 19425 (US); DINGLER, Noah E., Phoenixville, Pennsylvania 19460 (US); MORRISSEY, Erin H., Mont Clare, Pennsylvania 19453 (US); TACKIE, Jonathan N., Murrysville, Pennsylvania 15668 (US)
(74) Representative: Grünecker Patent- und Rechtsanwälte PartG mbB
(86) International application number: PCT/US2020/045916
(87) International publication number: WO 2021/034566

(56) References cited:
- WO-A1-2010/001121
- CN-U- 201 793 979
- GB-A- 2 394 965
- GB-A- 2 394 965
- US-A- 2 526 666
- US-A- 5 535 646
- US-A1- 2011 101 716
- US-A1- 2017 000 254
- US-A1- 2018 255 919
- US-B2- 9 119 465
- US-B2- 9 119 465

## Description

### FIELD

The present disclosure relates to collapsible, adjustable height tables having extendable legs.

### BACKGROUND

According to GB 2 394 965 A a collapsible iron board with legs is disclosed. The board consists of three sections with two hinges to allow folding of the end sections and to overlay the central section. The collapsible support legs are formed from two pivotally coupled legs, wherein each leg is telescopic with a separable foot element. On eof the legs is hinged to the underside of the central board section, while the other one is releaseably anchored in a mounting via a pin. Each foot element has a projecting tongue element which snap-fits into a clamping element. The whole of the collapsible support leg arrangement is stowed adjacent to the underside of the central board section and is within the platform area of it.

That is, compactness of conventional collapsible, adjustable height tables often corresponds to the distance of the vertical excursion. For example, the legs of an ironing board may be a limiting factor in the minimum width of the collapsed apparatus. If the ironing surface is reduced in size, the legs would extend beyond the width of the ironing surface when the apparatus was collapsed, and thus, the overall dimensions of the collapsed apparatus would not be reduced. If the length of the legs is shortened, the desired ironing board height would not be achieved. Thus, with ironing boards, and other folding, adjustable apparatuses, such as folding tables, desks and standing tables, the dimensions of the collapsed apparatus are dictated by the maximum height of the apparatus.

### SUMMARY

The present invention addresses a table in accordance with claim 1. Preferred embodiments are depicted in the dependent claims.

A collapsible, adjustable height table is disclosed that provides a reduced folded size compared to conventional collapsible, adjustable tables and other apparatuses. This multi-purpose apparatus may include a gas compression spring, or similar mechanism, to facilitate extending the table to desired heights. The novel telescoping legs enable use of a central pivot about which the legs rotate to fold and expand the table, wherein the pivot apparatus does not limit the length of the legs, and therefore does not limit the height of the table.

### DESCRIPTION OF DRAWINGS

The detailed description refers to the accompanying figures, which depict illustrative embodiments.
FIGS. 1A-C depict a perspective view, bottom view, and side view, respectively, of an adjustable height, foldable table in a folded position. FIG. 1D depicts a perspective bottom view of a table in a deployed position.
FIGS. 2A-C depict a side view, a perspective bottom view, and a perspective upright view, respectively, of the adjustable height, foldable table elevated to or toward its maximum height.
FIGS. 3A-B depict a side view and a perspective bottom view, respectively, of the adjustable height, foldable table elevated to or toward its maximum height.
FIGS. 4A-B depict a side view and a perspective bottom view, respectively, of the adjustable height, foldable table elevated to a lower height than depicted in the previous figures.
FIGS. 5A-B depict an illustrative leg assembly for the adjustable height, foldable table.
FIGS. 6A-B depict an illustrative pivot apparatus that connects the table legs to one another.
FIGS. 7A-B depict an isometric bottom view of the adjustable height, foldable table and an enlarged view of a mating pivot assembly.
FIG. 8 depicts a pivot assembly housing.
FIG. 9 depicts a bottom isometric view of the adjustable height, foldable table showing the lifting mechanism.
FIGS. 10A-D depict the components of a locking and release mechanism to secure the adjustable height, foldable table in a folded position.
FIGS. 11A-D depict a release mechanism that secures the legs of the adjustable height, foldable table in a folded position when the table is collapsed, and releases the legs to expand the table.
FIGS. 12A-B depict a top portion of the telescoping leg locking mechanism in a locked and unlocked configuration, respectively.
FIGS. 13A-B depict the bottom portion of the telescoping leg locking mechanism in a locked and unlocked configuration, respectively.
FIGS. 14A-B show an illustrative release mechanism for the telescoping legs of the adjustable height, foldable table.
FIGS. 15A-B depict a range limiter to secure or position the adjustable height, foldable table at a particular height.
FIG. 16 depicts a further embodiment of a range limiter.
FIGS. 17A-B depict operation and components of the range limiter.
FIGS. 18A-B further illustrates operation and components of the range limiter.
FIG. 19 depicts individual parts of the range limiter assembly.
FIG. 20 depicts components of a system to simplify range limiter assembly.
FIGS. 21A-G further depict operation of the range limiter assembly.

### DETAILED DESCRIPTION OF EMBODIMENTS

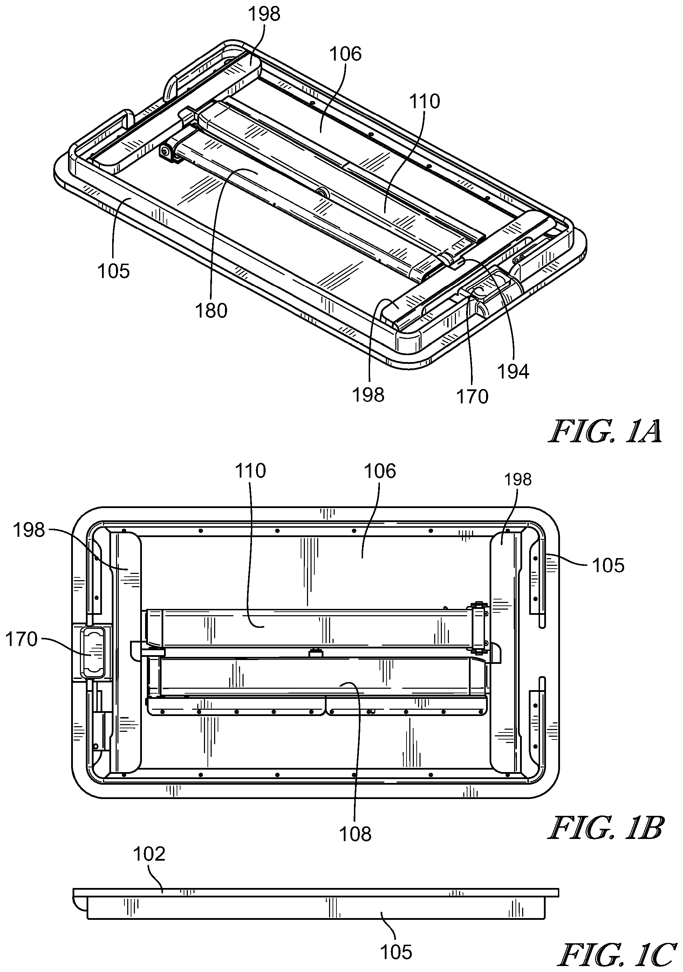

FIGS. 1A-D, 2A-C, 3A-B, 4A-B depict an illustrative collapsible, folding table 100 in various configurations. FIGS. 1A-D, 2A-C, 3A-B, 4A-B show simplified depictions of various illustrative configurations. Optionally, stops, detents or other mechanisms may be incorporated to signal when a table is at a particular height, and/or maintain it in the desired position. These heights may represent coffee table, sitting table and standing table configurations, or they may include additional height options or fewer height options.

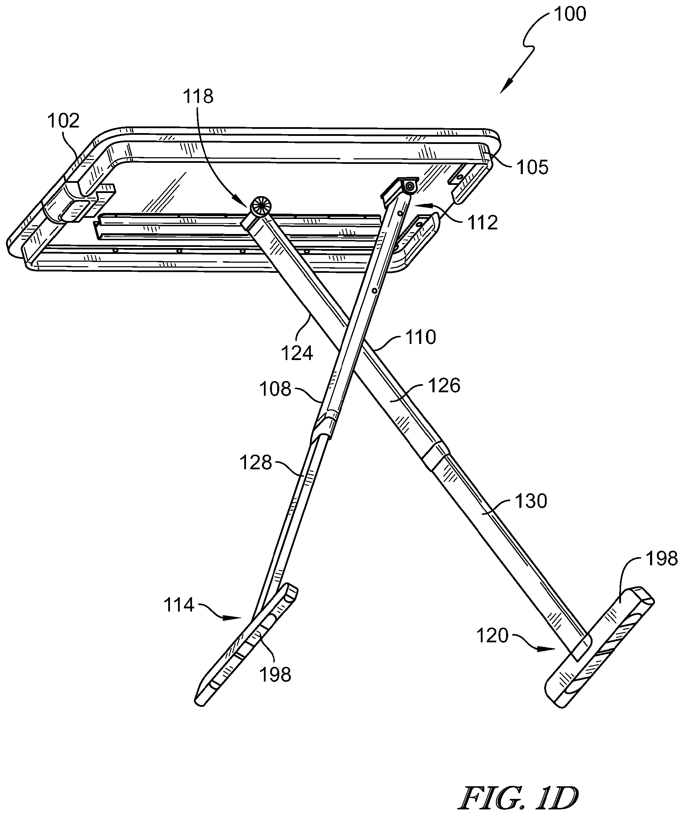

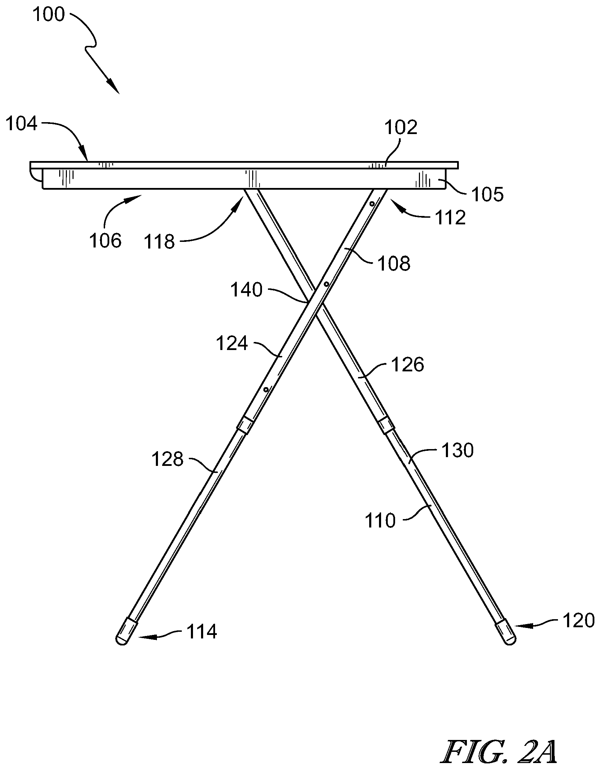

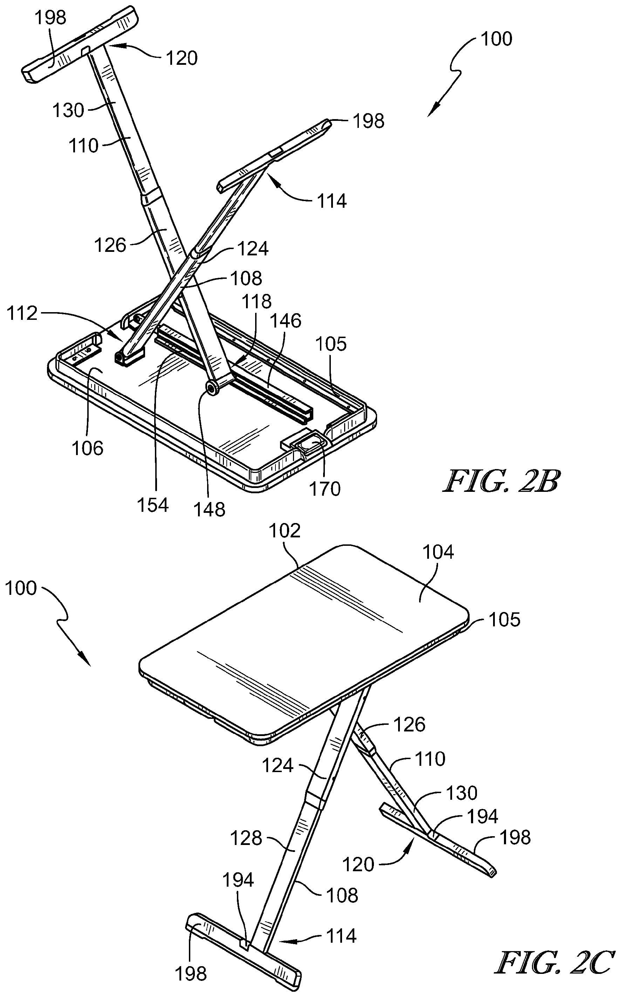

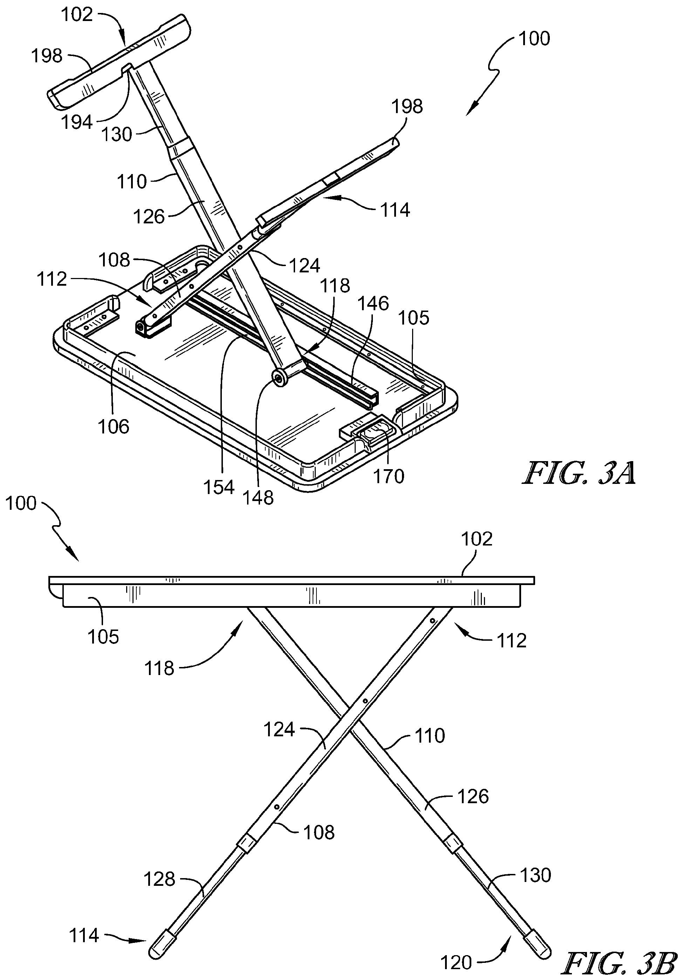

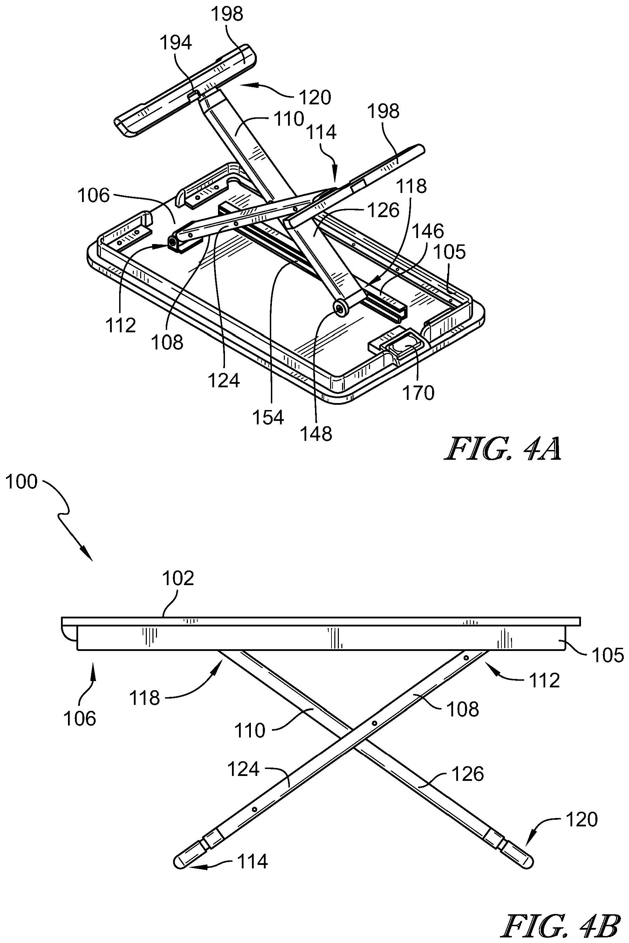

FIGS. 1A-C depict a perspective view, bottom view, and side view, respectively, of table 100 in a folded position. FIG. 1D depicts a perspective bottom view of a table in a deployed position. FIGS. 2A-C depict a side view, a perspective bottom view, and a perspective upright view, respectively, of table 100 elevated to or toward its maximum height. This height may be used, for example, as a standing table. FIGS. 3A-B depict a side view and a perspective bottom view, respectively, of table 100 elevated to or toward its maximum height. This height may be used, for example, as a sitting table. FIGS. 4A-B depict a side view and a perspective bottom view, respectively, of table 100 elevated to a lower height than depicted in the previous figures. This height may be used, for example, as a coffee table. In each case, the height of table 100 is temporarily locked or secured in place. Reference to specific heights or table uses herein is for illustrative purposes and does not limit the scope of the invention.

The height of table 100 may be adjusted by scissoring the legs and/or extending them. The height of table 100 may be limited to a number of specific heights or may be continually adjustable between a minimum and maximum height.

Table 100 has a table top 102 having a top surface 104 and a bottom surface 106. An apron 105 extends downward from bottom surface 106. A first leg 108 and a second leg 110 extend from table top 102. First leg 108 and second leg 110 may extend directly from table top bottom surface 106, or may have components disposed therebetween, for example to facilitate attachment either fixedly or slidably.

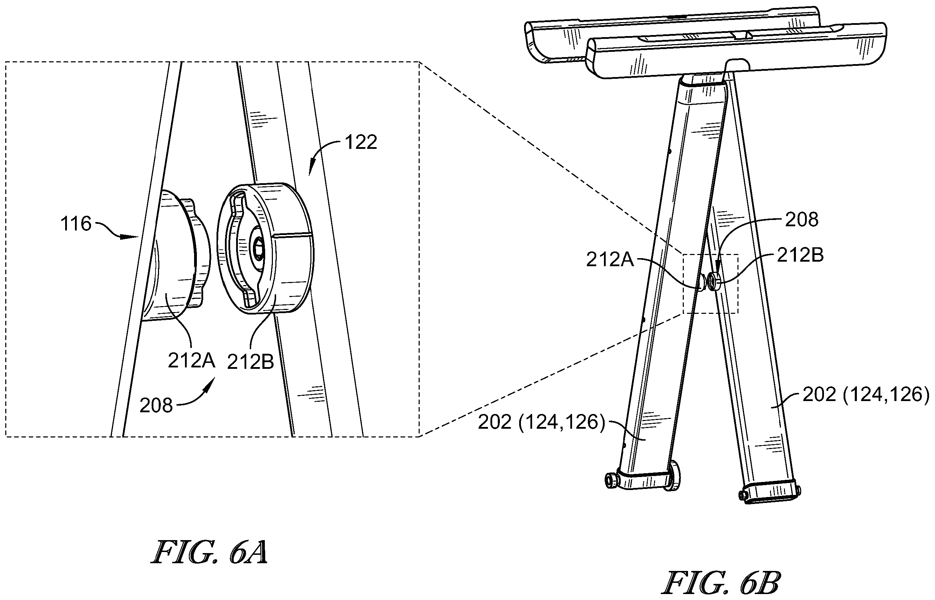

First leg 108 has a top end 112 and a bottom end 114, and a pivot 116 located between top end 112 and bottom end 114. Similarly, second leg 110 has a top end 118 and a bottom end 120, and a pivot 122 located between the top end 112 and the bottom end 114. First leg 108 and second leg 110 are attached at pivots 116 and 120. Pivots 116 and 122 (identified generally in FIG. 6A-B) may be, for example, pivot assemblies 212A, 212B as described below, or other pivot connections that allow first leg 108 and second leg 110 to scissor with respect to one another and are compatible with the folding mechanisms employed.

As can be seen in FIG. 2A with table 100 at or near its maximum height, first leg 108 and second leg 110 are telescopic. Each of first leg 108 and second leg 100 comprises two sections, a sleeve section 124, 126 and an extension section 128, 130, wherein extension section 124, 126 is internally slidable in sleeve section 124, 126. Sleeve section 124 is part of first leg 108, which is the leg that is hinged to table top 102. Sleeve section 126 is part of second leg 110, which is the leg that is slidable with respect to table top 102. Second leg 110 may be resistively, slidable with respect to table top 102 to the extent necessary for safety or ease of folding and expanding, for example. Second leg 110 may also be biased to resistively slide in increments.

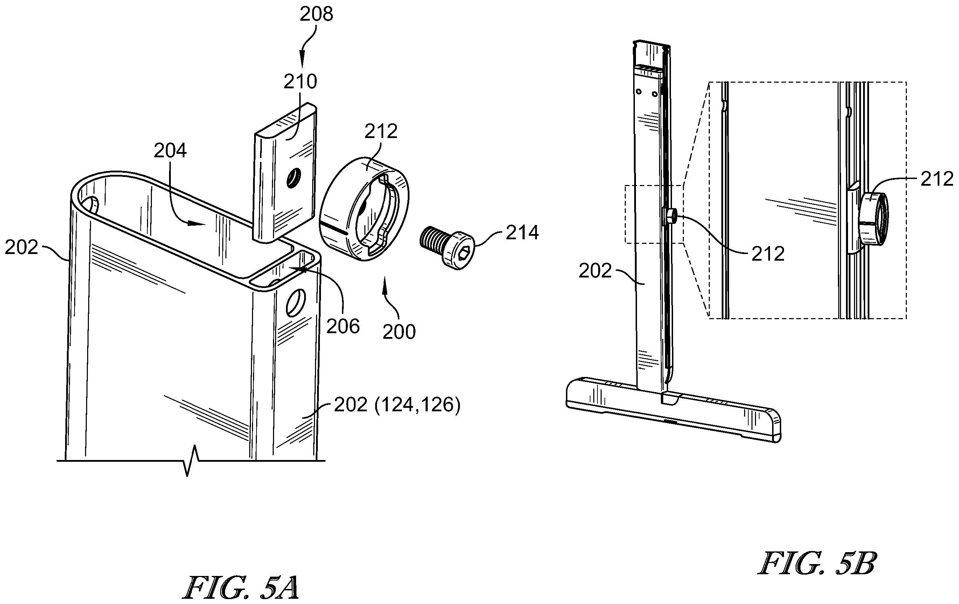

FIGS. 5A-B depict an illustrative leg assembly 200, which can be incorporated in either first leg 108 or second leg 110. Leg assembly 200 is shown with respect to a compartmentalized sleeve section 202, such as sleeve sections 124, 126. Compartmentalized sleeve section 202 is divided longitudinally into a first larger enclosed space 204 and an adjacent second smaller enclosed space 206. Leg extension sections 128, 130 are dimensioned to telescope into the large enclosed space 204, contained in each of sleeve sections 124, 126, whereas small enclosed space 206 houses the fastener for the leg pivot. Advantageously, this compartmentalized configuration of sleeve section 202 allows the telescoping leg to pass through the pivot axis. Although the two enclosed spaces are referred to as "small" and "large" or "smaller" and "larger," they need not have that relative dimensional relationship. More broadly, one compartment must be large enough to accommodate a leg extension and the other a fastening component to secure the pivot to the leg, to allow the leg extension to slide past the pivot. This may provide a greater degree of compactness of the folded configuration dimensions. It is further noted that the compartments need not be fully enclosed. For example, the smaller or second enclosed space merely needs to allow for fastening of a pivot assembly, and thus, may only need to occupy a small distance along the sleeve.

FIGS. 6A-B depict an illustrative pivot apparatus 208 that extends into the smaller enclosed space 206 of each of first leg sleeve section 124 and second leg sleeve section 126. FIG. 6A shows pivot apparatus 208 positioned on compartmentalized sleeve 202. FIG. 6B is an enlargement of pivot apparatus 208. An expanded view of components of pivot apparatus 208 are also shown in FIG. 5A. Pivot apparatus 208 includes a nut 210, which fits within small enclosed space 206. A pivot assembly 212 is positioned outside of compartmentalized sleeve 202. Nut 210 and pivot assembly 212 are fastened to one another, for example, by a screw 214. Nut 210 may be any shape or material that adequately secures mating pivot assemblies 212A, 212B, such as a plate, disk or other configuration. The term "nut" will be used broadly to include any such component.

Pivot apparatus 208 is attached between a first end 132 of sleeve section 124 and a second end 134 of sleeve section 124, and further attached between a first end 136 of sleeve section 126 and a second end 138 of sleeve section 126. Mating pivot assemblies 212A, 212B, which may be for example, a male or female pivot assembly component. Mating pivot assembly 212A is located on either first leg 108 or second leg 110, and the complementary mating pivot assembly is located on the other of first leg 108 or second leg 110. When engaged, mating pivot assemblies 212A, 212B rotate with respect to one another.

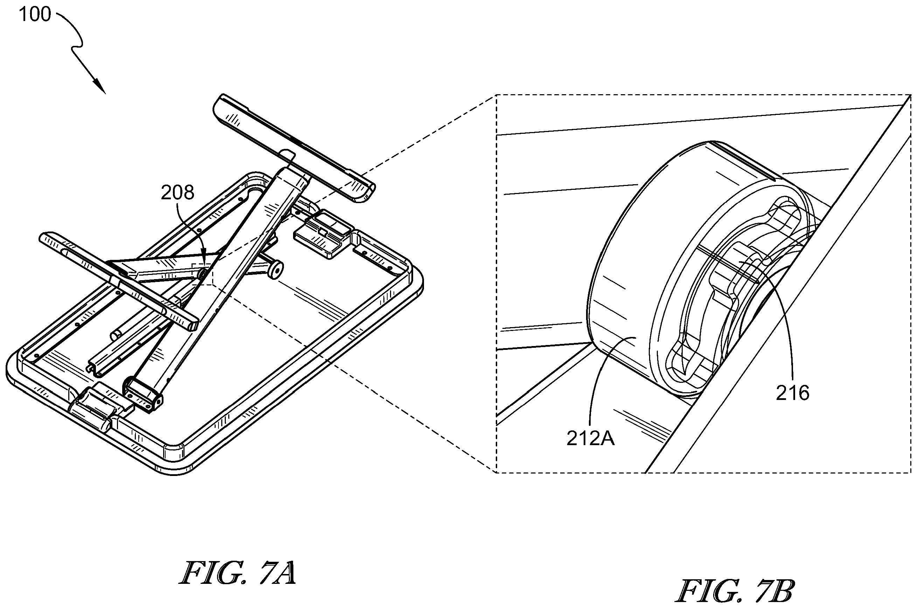

FIG. 7A depicts an isometric view of table 100 from the bottom, showing a portion of pivot apparatus 208. An enlarged view is shown in FIG. 7B and includes a view of a mating pivot assembly 212. A tab 216 is shown in mating pivot assembly 212A male component, which would engage with a female mating pivot assembly 212B female component.

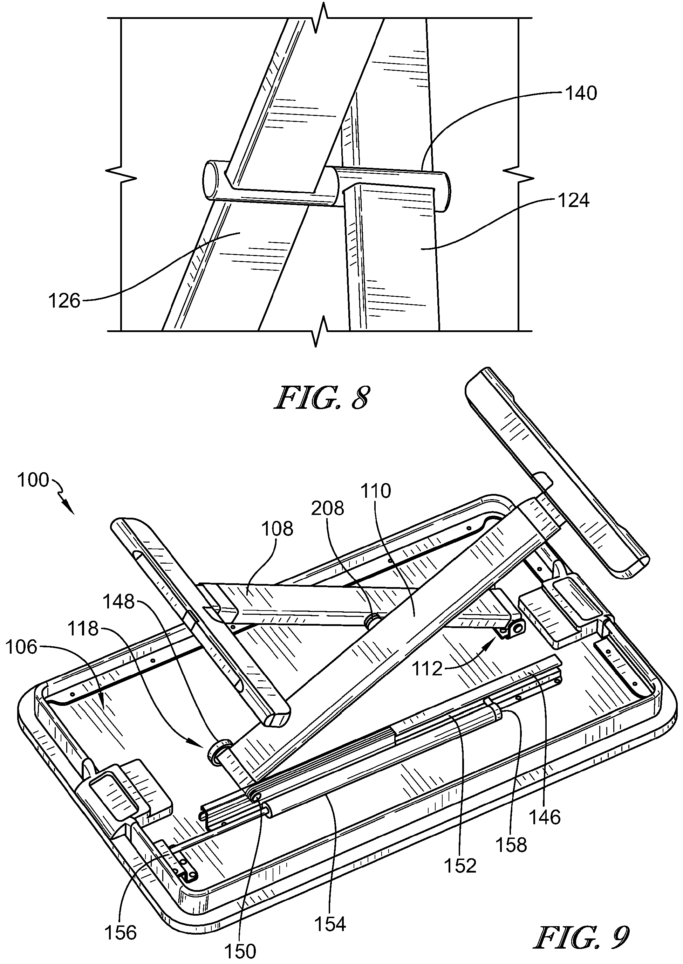

FIG. 8 depicts an optional pivot housing 140. Pivot housing 140 includes a first leg pivot housing component 142 having an opening through which the first leg sleeve component 124 is disposed and a second leg pivot housing component 144 having an opening through which the second leg compartmentalized sleeve component 126 is disposed. The first leg pivot component is rotatably attached to the second leg pivot component. Other configurations of pivot housing may be used that allow for rotation of first leg 108 and second leg 110 with respect to one another, including having the housing portions integral with the legs.

In an illustrative embodiment, each leg extension section 128, 130 has a length allowing it to extend within its associated sleeve component 124, 126 past pivot apparatus 208. This is made possible by the compartmentalized structure of sleeve components 124, 126, which allows the telescoping parts to be accommodated within first enclosed space 204, while second enclosed space 206 accommodates pivot apparatus 208, thereby keeping the parts separated.

FIG. 9 depicts a bottom isometric view of table 100 having a lifting mechanism 101, which may comprise a lift assist component such as a spring apparatus, or may be operated merely by a user applying a preferably light force to achieve the desired height. First leg top end 112 is fixedly attached to table top bottom surface 106. Second leg top end 118 is slidably attached to table top bottom surface 106. Pivot apparatus 208 is configured to attach first leg 108 to second leg 110 at first leg pivot 116 and second leg pivot 122.

A track 146 is attached to table top bottom surface 106. A first wheel 148 is attached to second leg top end 118 and allows second leg 118 to slide along table top bottom surface 106. A second wheel 150 is disposed laterally opposite first wheel 148 and is attached to second leg top end 118. Second wheel 150 is disposed within the track 146 and is slidable along track 146. Second wheel 150 is rotationally attached to a pull bar 152. A gas compression spring 154 having a first end 156 and a second end 158 is fixedly attached at its first end 156 to table top bottom surface 106 or an extension therefrom. Gas compression spring second end 158 is fixedly attached to pull bar 152, thereby forcing spring 154 to compress when table 100 is collapsed and extend as table 100 is raised.

In illustrative embodiments, gas compression spring 154 is positioned off-center between the opposite sides of table top bottom surface 106. This configuration facilitates table 100 folding flat or at least with a minimum depth as measure from table top surface 104. Table 100 may be configured so folded components are within the depth of apron 105. This may facilitate storing table 100, such as underneath a bed or sofa, as it may slide more easily and table components are shielded from catching on objects. It remains adjacent, instead of under, various table components such as first leg 108 and second leg 110. Although reference is made to compression spring 154, a tension spring may be employed instead. For example, the mechanism comprising pull bar 152 and compression spring 154 can be replaced with a tension spring.

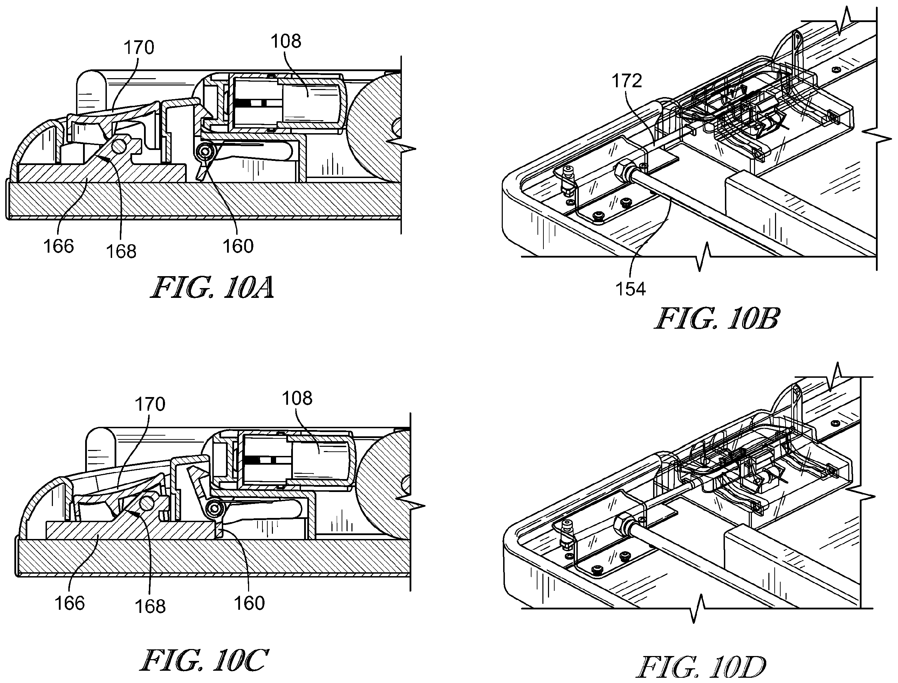

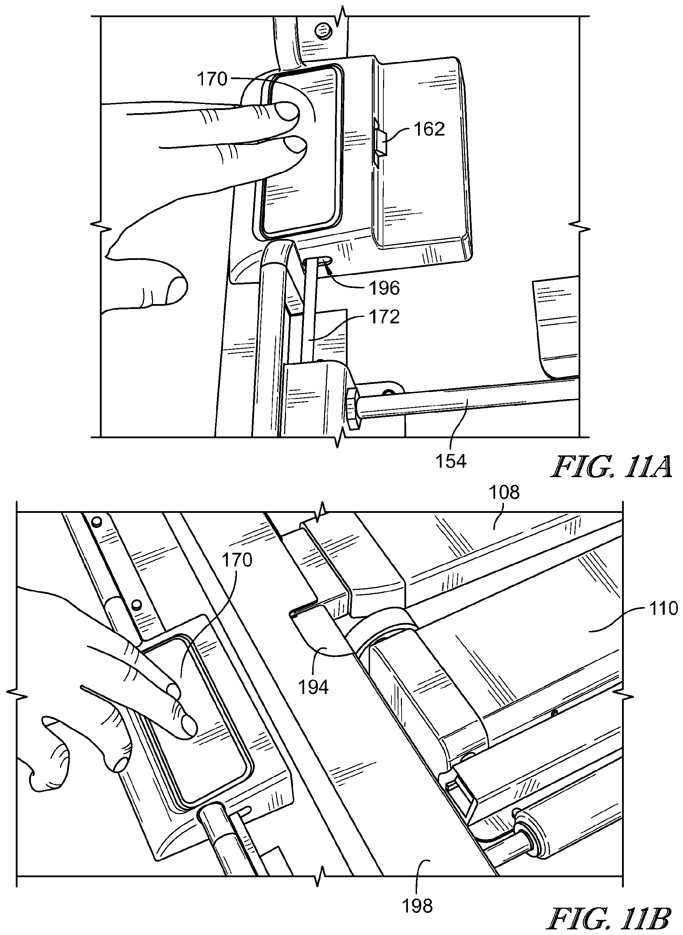

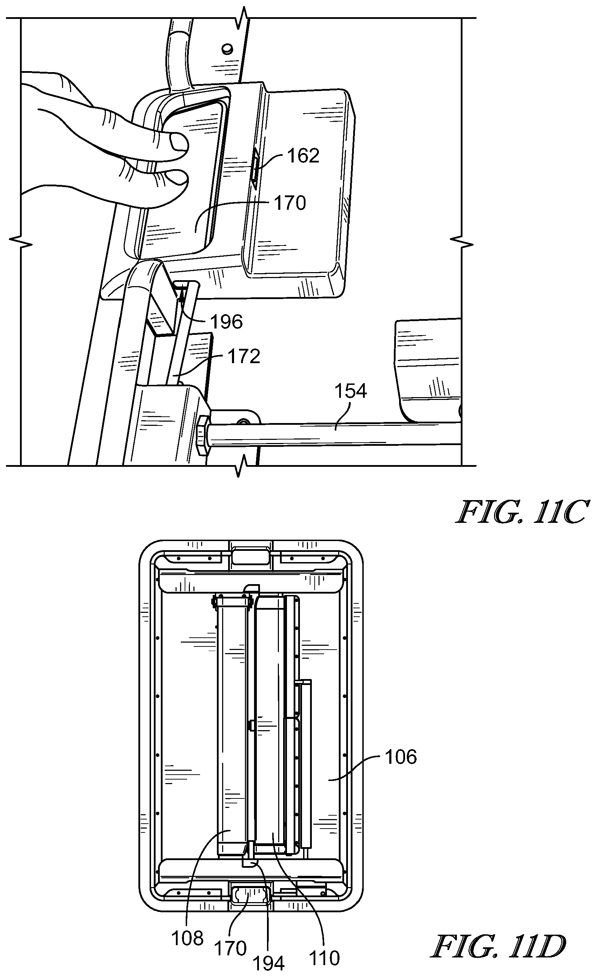

FIGS. 10A-D depict the components of a locking and release mechanism to secure table 100 in a folded position. FIGS. 11A-D show the locking mechanism with illustrative housing components. The locking and release mechanism comprises a storage catch 160 pivotably attached to table top 102. Storage catch 160 has a hook 162. An indent 164 in first leg 108 at first leg bottom end 114 is complementary to storage catch hook 162 to the extent necessary for hook 162 to engage indent 164. Storage catch 160 is biased to engage first leg bottom indent 164. A shuttle 166 is slidably attached in the locking and release mechanism from a first position engaging storage catch 160 and countering the bias of storage catch 160 toward first leg bottom indent 164 to unlock first leg bottom 114, and a second position away from the storage catch 160 so as not to affect the bias of storage catch 160 toward first leg bottom indent 164. FIG. 11 shows the locking mechanism engaged with a leg 108 when table 100 is in a folded position.

Shuttle 166 has an angled surface 168. A table release lever 170 is movable toward and away from table top 102 and engaged with shuttle angled surface 168, so as to force shuttle 166 to move away from storage catch 160 according to the engagement position of table release lever 170 with respect to shuttle angled surface 168. The locking and release mechanism further includes a release rod 172 configured to release a gas spring release component to allow gas spring 154 to expand, thereby elevating table 100.

FIGS. 11A-D depict the illustrative table release mechanism that secures legs 108, 110 in a folded position when the table is collapsed, and releases legs 108, 110 to expand the table. FIG. 11A shows table 100 in the expanded position with table release lever 170 shown prior to it being depressed. Table release lever 170 operates hook 162 which is designed to latch onto a table leg. Release rod 172 is also operated by release lever 170. Note the position of release rod 170 in slot 172. As seen in FIG. 11C, when table release lever 170 is depressed, hook 162 is drawn into the housing surrounding table release lever 170. Release rod 172 is forced to an opposing end of slot 196. See the description above of FIGS. 10A-D for additional information regarding the operation of release rod 172. FIGS. 11B, 11D are views of table 100 prior to releasing the legs from the folded position.

FIG. 11D shows a bottom view of table 100 in a folded position. Legs 108, 110 are collapsed against table top 102. Leg 108 is engaged with hook 162 (not visible). Leg release button 194 is identified to differentiate it from table release lever 170. FIG. 11B shows table release lever 170 prior to it being depressed. FIG. 11C shows table release lever 170 being depressed and leg 108 disengaged from the mechanism to allow it to assume an expanded configuration.

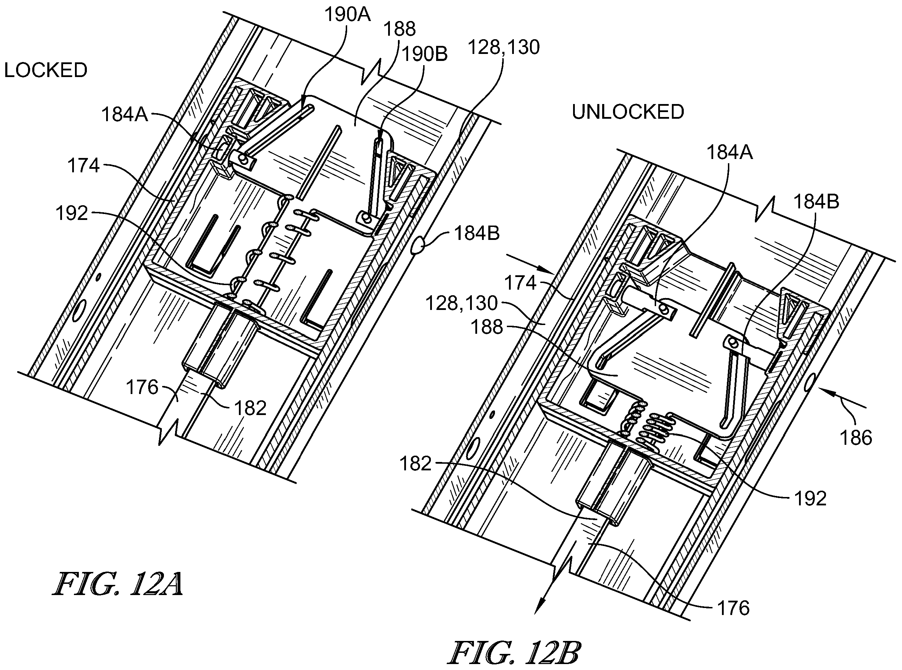

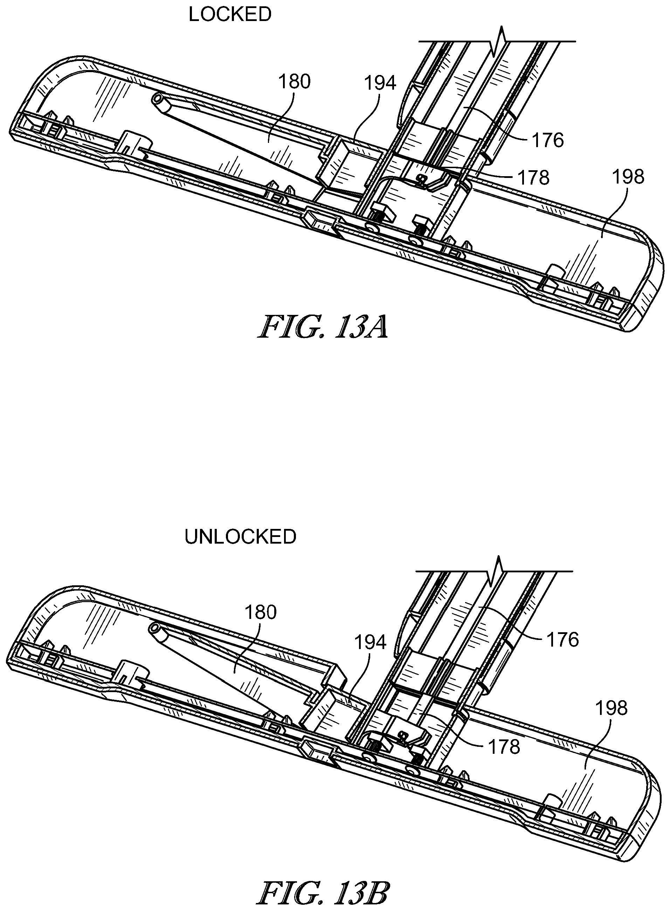

Table 100 includes a telescoping leg locking mechanism in each of first leg 108 second leg 110. FIGS. 12A-B depict a top portion of the telescoping leg locking mechanism in a locked and unlocked configuration, respectively. FIGS. 13A-B depict the bottom portion of the telescoping leg locking mechanism in a locked and unlocked configuration, respectively. The top and bottom portions are connected by connecting rod 176. The telescoping leg locking mechanism includes a lock housing 174 disposed within each leg extension section 128, 130. Lock housing 174 may snap into extension sections 128, 130. A connecting rod 176 is engaged at a first end 178 with a leg extension release lever 180 and engaged at a second end 182 with lock housing 174 or components therein. A pair of opposing pins 184A, 184B extend laterally through the lock housing 174 and are configured to engage with openings 186 in leg sleeve components 124, 126 to lock leg extension section 128, 130, respectively at a fixed height. When depressed, leg extension release lever 180 withdraws pins 184A, 184B from openings 186, thereby allowing leg extension sections 128, 130 to slide within leg sleeve components 124, 126.

A pin guide 188 extends from connecting rod 176. Pin guide 188 has opposing slots 190A, 190B angled with respect to the longitudinal side of extension leg sections 128, 130. A spring 192 is disposed around connecting rod 176 within lock housing 174 and contained within lock housing 174 by a housing wall. Spring 192 biases pin guide 188 to force pins 184A, 184B into openings 186 of sleeve components 124, 126. Release lever 180 is configured to move connecting rod 176 to compress spring 192 against lock housing 174, thereby withdrawing pins 184A, 184B from openings 186. In addition to the incremental lengthening and shortening of the legs, a continuous adjustment may be incorporated to allow any selection between a minimum and maximum length. Various telescoping mechanisms may be used for the legs, provided they do not interfere with the pivot apparatus.

Advantageously, telescoping legs 108, 110, together with pivot apparatus 208 allow table 100 to be elevated to a substantial height and folded compactly, without legs 108, 110 extending beyond the width of table top 102 (wherein the "width" is the greater of the table top dimensions). Therefore, a user need not give up height to achieve compactness. In an illustrative embodiment, table 100 has a width in the range of 750 mm to 1025 mm and the table height is in the range of about 1000 mm to about 1250 mm. In a particular embodiment, the table width is about 1000 mm and can reach a height of about 1124 mm and yet legs 108, 110 do not extend beyond the width of table top 102 when the table is collapsed. Various illustrative embodiments have a maximum height and maximum leg length greater than the width of the table, however, when in a folded configuration the legs do not extend beyond the width of the table while not being folded along their length. Disclosed embodiments also may lend themselves to lightweight, inexpensive construction, even for standing tables such as used in office environments.

Furthermore, table 100 is configured so that as it is elevated and second leg top end 118 slides across the width of table top 102 toward the first leg top end 112, and therefore, away from the opposing edge of table top 102, table 100 remains stable. The extent to which second leg top end 118 can slide toward first leg top end 112 can be balanced with the width of table top 102 to assure table 100 remains stable. The center of gravity in relation to the leg top ends 112, 118 and the leg bottom ends 114, 102 and the weight of table top 102 can be selected for optimum stability.

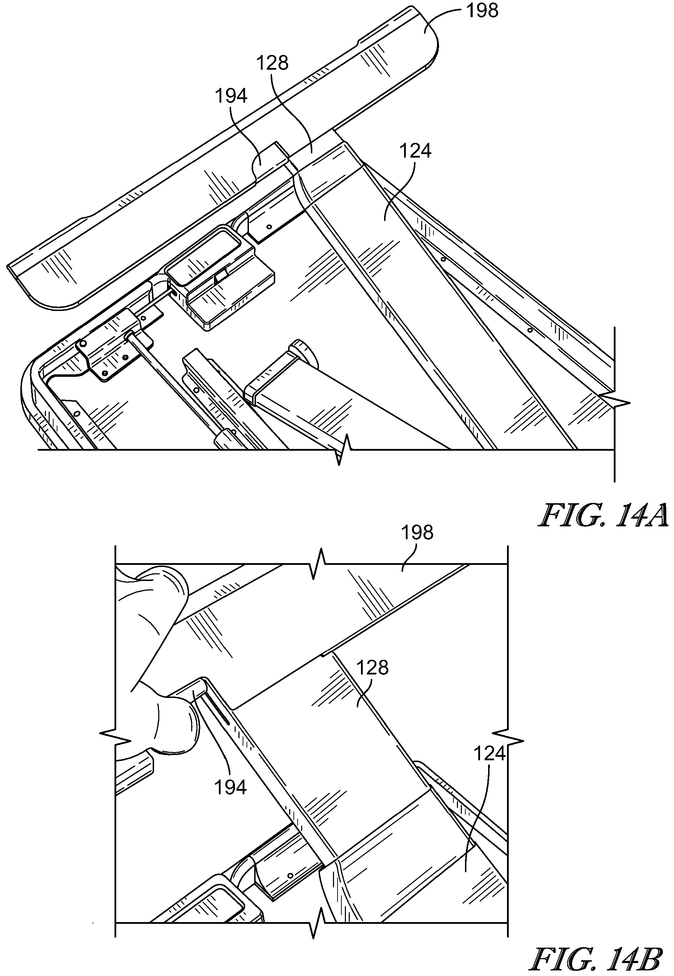

FIGS. 14A-B show an illustrative release mechanism for the telescoping legs. FIG. 14A depicts leg release button 194 positioned on a foot 198 attached to leg extension section 128. Foot 198 may be perpendicular to leg extension section 128. Other positions of leg release button 194 are possible, provided a user can readily depress the button and it can engage/disengage the leg sections. FIG. 14A shows leg extension section 128 fully nested in sleeve 124. FIG. 15C shows extension 128 partially withdrawn from sleeve 124, while leg release button 194 is depressed. Extension 128 may be withdrawn from sleeve 124 to a length necessary to provide the desired table height. Each of legs 108, 110 (see FIG. 1, for example) may have a release button for withdrawing the leg extension from the sleeve. Integrating release button 194 into the leg foot to actuate the associated telescoping leg lock mechanism, such as shown in FIGS. 14A - B, may provide an ergonomic configuration.

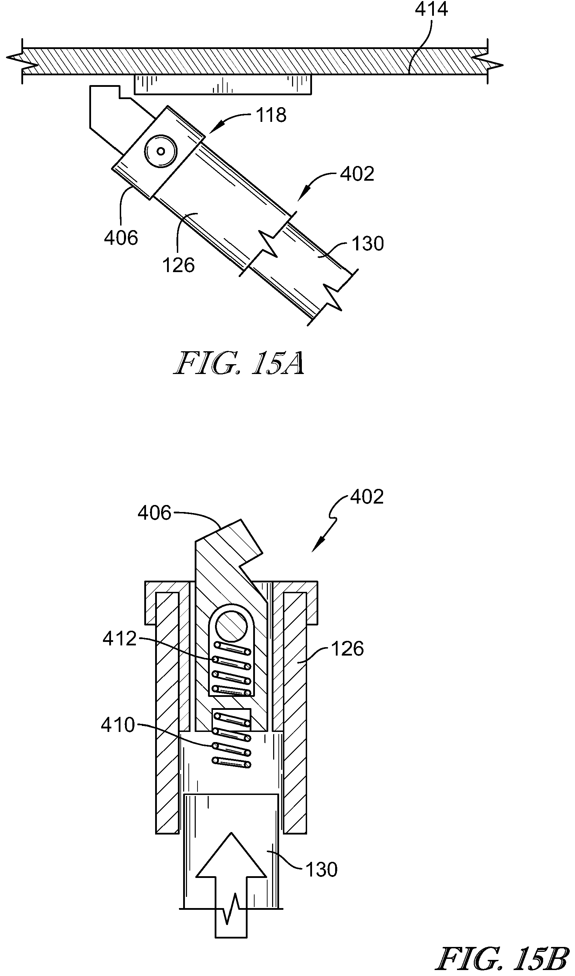

FIGS. 15A-B depict an example of an illustrative stop 402 that forms not part of the present invention. The stop 402 may also referred to as a range limiter, attached to leg top end 118 of sleeve 126 for a coffee table height, for example. FIG. 15B shows a two-way spring-loaded plunger 406 positioned at the end of leg 408 for engagement with stop component 416. Stop component 416 is affixed to the bottom of a table top 414. When leg 408 is in a storage position, plunger 406 is pushed outward preventing table leg 408 from opening too far, i.e. from expanding to a height beyond a particular height, such as a coffee table height. FIG. 15B shows a cross-section of the plunger mechanism. Two springs are arranged in the mechanism with different forces or strengths associated with them. For simplicity, they will be referred to as a heavy spring 410 and a light spring 412, although these are used only as relative terms. Heavy spring 410 is implemented to add compliance to the system. As shown, the extension section of leg 408 pushes against heavy spring 410 when the table is collapsed, thereby pushing plunger 406 outward. Light spring 412 keeps plunger 406 withdrawn when leg 408 is extended. By limiting the position of leg 408 with respect to table top 414, a tendency for the table to tip when the legs are extended can be reduced or eliminated.

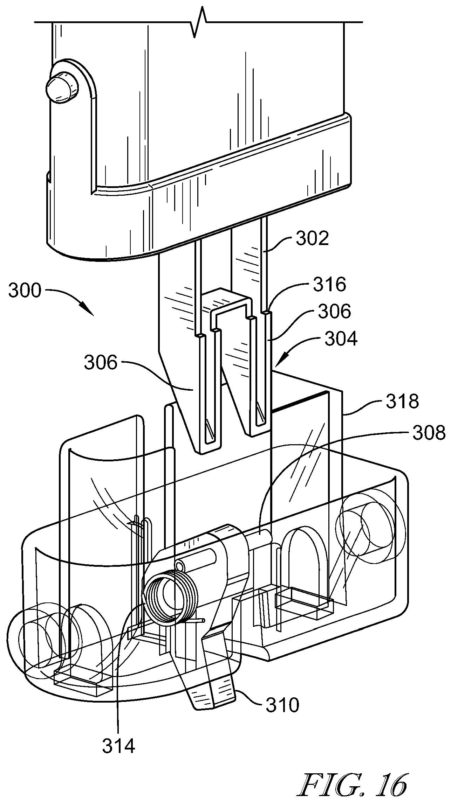

FIG. 16 depicts an example of a range limiter 300 of the present invention. Illustrative range limiter 300 includes a lock housing 302 that may be disposed, for example, toward or at the leg top end 118 of sleeve 126. Lock housing 302 has a forked component 304 with ramped ends 306. Ramped ends 306 engage a pin 308. Pin 308 is disposed through a latch 310. Pin 308 may be integral with latch 310 or attached in a manner other than being disposed through latch 310. Pin 308 may also consist of two pins. Pin 308 and latch 310 may also be a single combined part. Latch 310 is biased clockwise about pivot 312 by torsion spring 314.

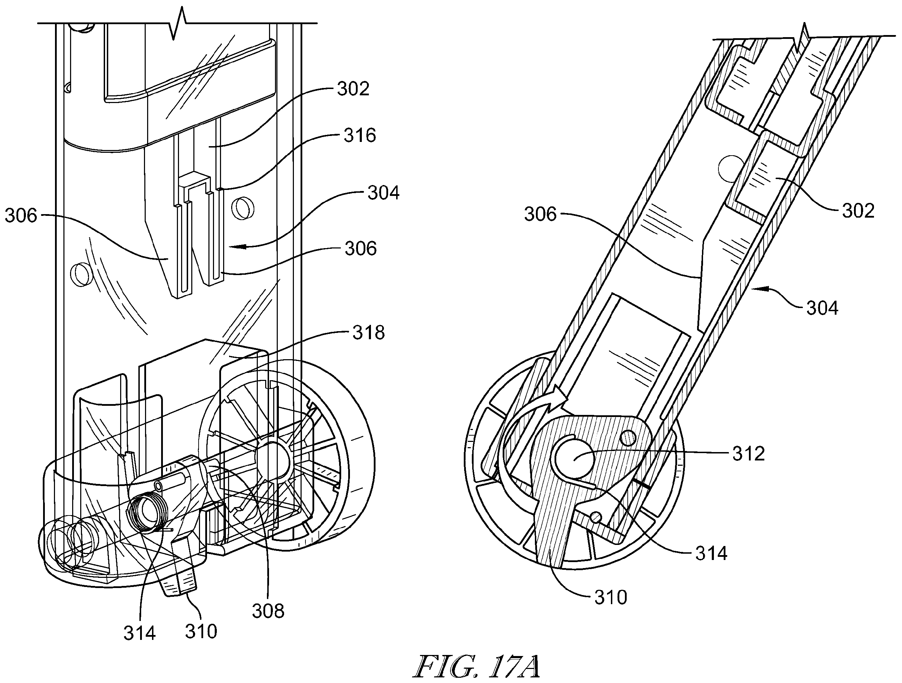

As shown in FIGS. 17A-B, as the table leg is collapsed, ramped ends 306 engage pin 308, forcing latch 310 to rotate counter clockwise about pivot 312 into a locked position. When the table leg is fully collapsed, pin 308 rests on a flat section 316 of forked component 304, preventing any force applied to latch 310 from being transferred to the inner leg in the direction of movement of the inner leg.

FIG. 17A depicts latch 310 biased by torsion spring 314 in a clockwise direction. Latch torsion spring 314 rests against an inner wall of a leg end cap 318 ("limiter housing"). Forked component 304 is shown displaced from leg end cap 318. Ramped ends 306 of forked component 304 have not yet engaged pin 308.

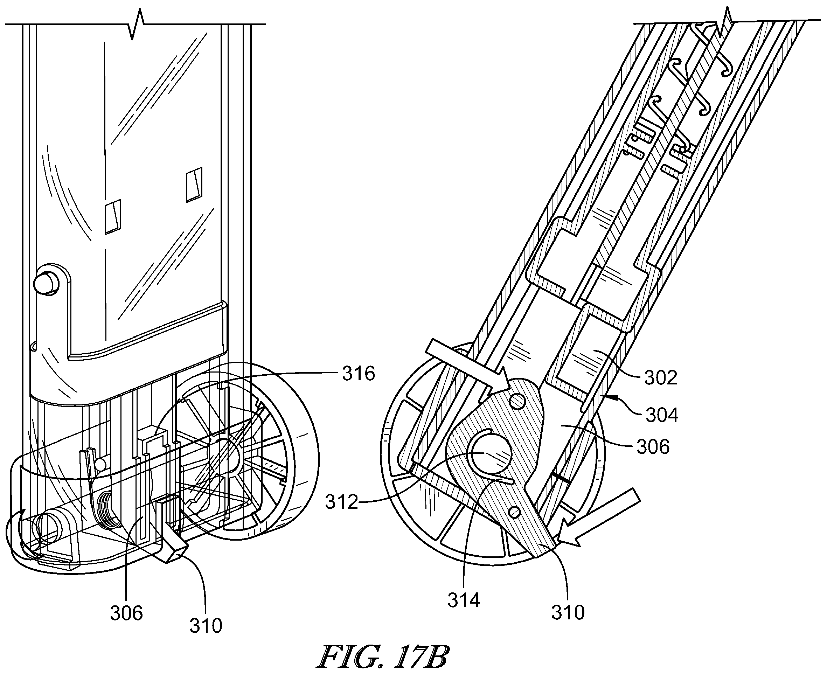

FIG. 17B shows ramped ends 306 of fork component 304 engaged with ramped ends 306 of forked component 304. Ramped ends 306 have reached their excursion limit at the bottom of leg end cap 318. Once the leg has collapsed fully, latch 310 can only apply force to the inner leg perpendicular to the direction of movement of the inner leg. This is relevant when latch 310 hits a stop component (320) on the underside of the table top, because at that moment, the force from the gas spring (which is trying to raise the table) is being transferred through the latch. Because the resultant load applied by latch 310 onto lock housing 302 is perpendicular to the telescoping direction, latch 310 should not cause the telescoping lock mechanism to bind. In other words, the telescoping lock mechanism can function normally because latch 310 is unable to apply a load to the end cap 318 in a way that might cause the lock mechanism to bind.

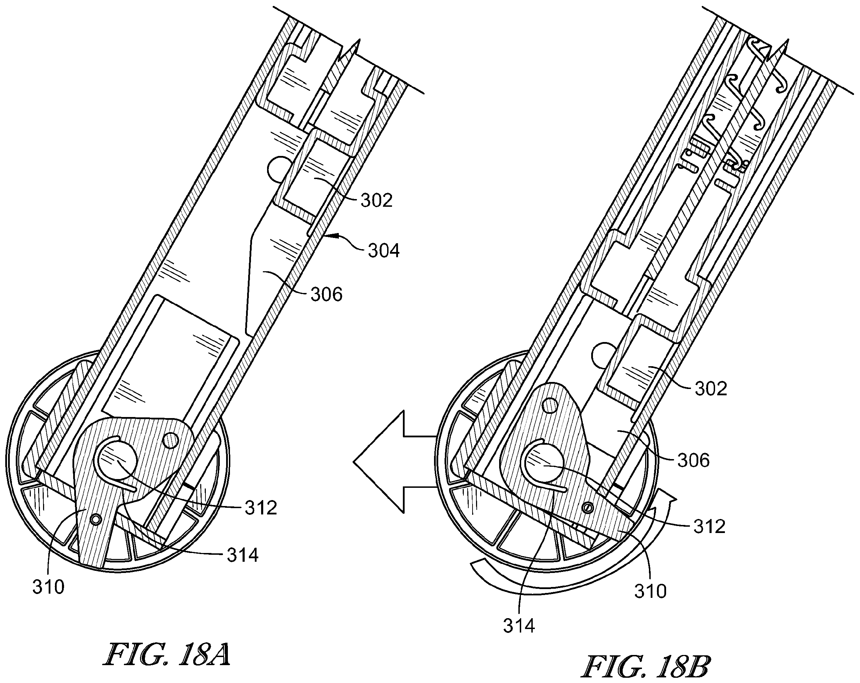

FIGS. 18A-B show two positions of latch 310. In FIG. 18A, ramped ends 306 have not engaged pin 308 so latch 310 is extended a maximum amount from the leg. In FIG. 18B, ramped ends 306 are fully engaged with pin 308 so latch 310 is rotated out of the way as the leg moves backwards over a limiter stop component.

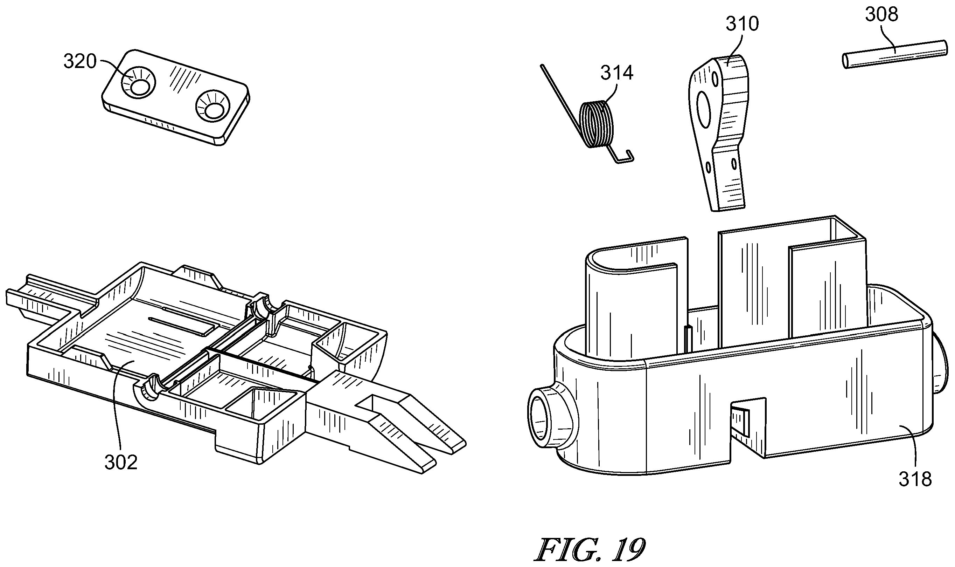

FIG. 19 depicts illustrative parts of the range limiter assembly according to present invention. The parts include stop 320, which is affixed to the underside of the table top, torsion spring 314 to bias latch 310, latch 310 which is connected to the extension section 130 of the second leg 110, pin 308, which is disposed through latch 310 and torsion spring 314, lock housing 302 and leg end cap 318.

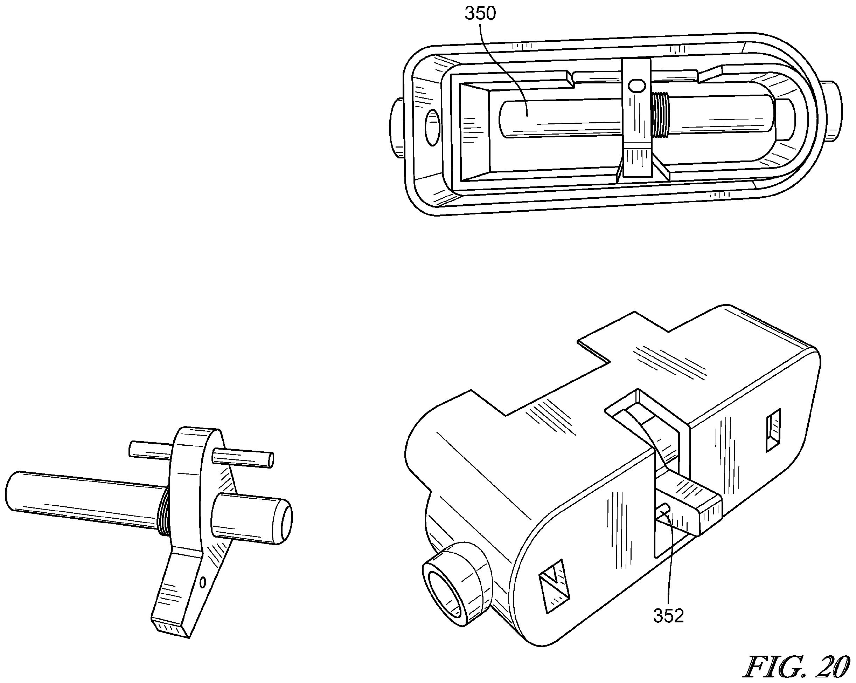

FIG. 20 depicts components to simplify range limiter assembly. A push out mandrel 350 and an assembly pin 352 are fixtures used for holding latch 310 and torsion spring 314 in place while the subassembly is fitted onto leg top end 118 of sleeve 126 and attached to the table.

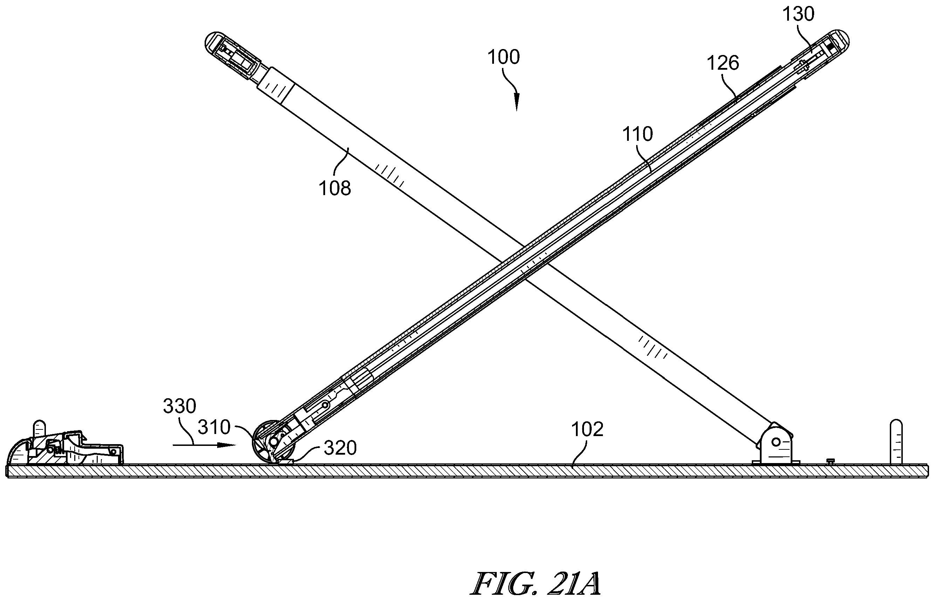

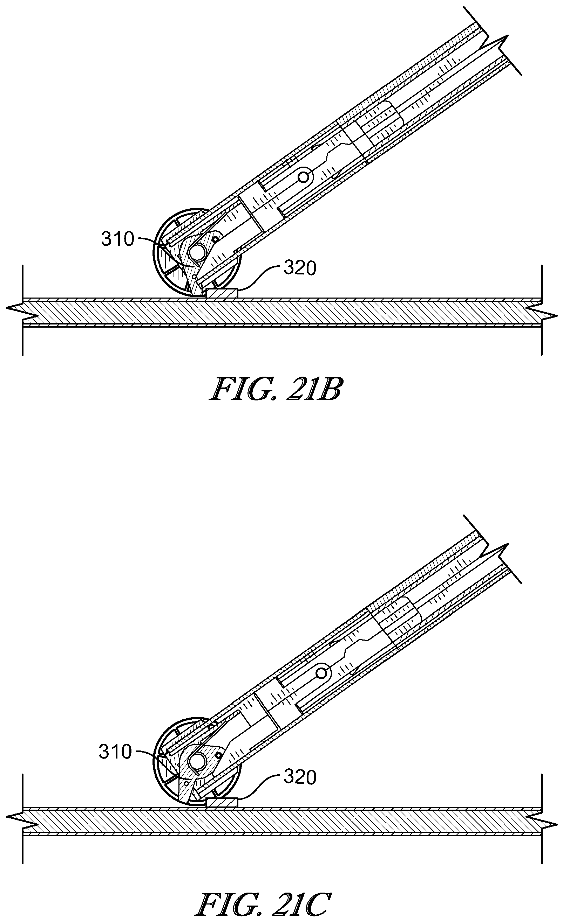

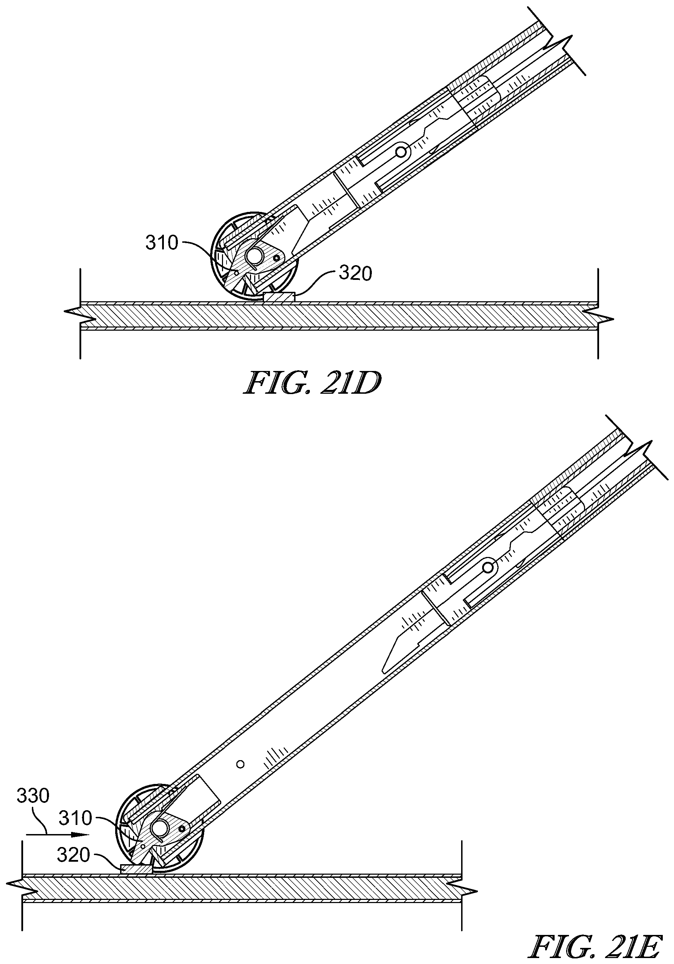

FIGS. 21A-G depict operation of a limiter assembly according to present invention. FIG. 21A depicts a side view of a table 100 with its top side down. FIGS. 21B-21G depicts close-ups of limiter assembly during operation. FIG. 21A shows a limiter assembly approaching stop 320 in the direction of arrow 330. FIG. 21B shows latch 310 contacting stop 320. FIG. 21C depicts limiter operation as extension section 130 of second leg 110 extends from sleeve section 126. As extension section 130 extends from sleeve section 126, latch 310 rotates clockwise (as viewed in FIG. 21C) out of the way of stop 320. FIG. 21D shows further progression of the limiter assembly as extension section 130 extends further from sleeve section 126, resulting in latch 310 being completely open. FIG. 21E shows operation of the limiter assembly as extension section 130 becomes further extended from sleeve section 126, which rotates latch 310 further clockwise to an open position, allowing latch 310 to pass over stop 320.

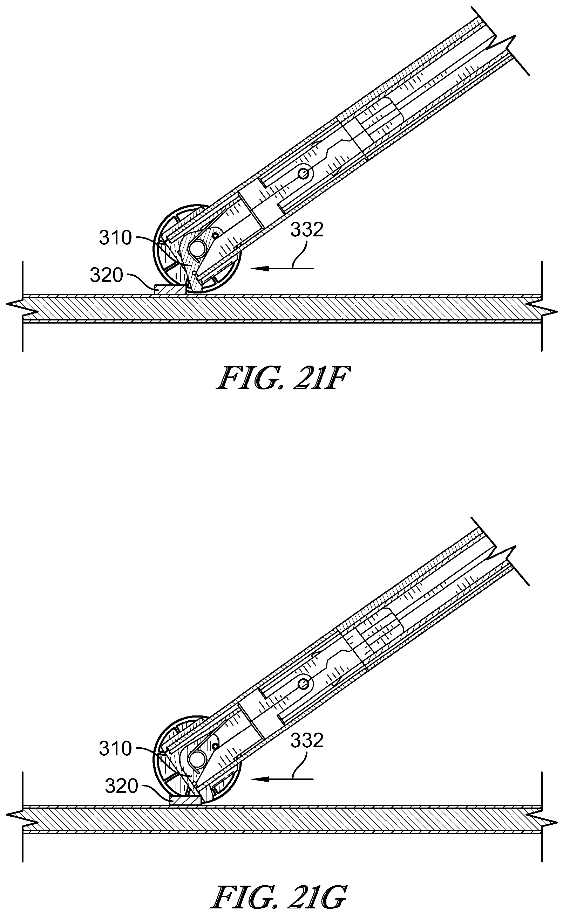

FIG. 21F shows latch 310 on the opposing side of stop 320 during collapse of leg 110. The limiter assembly is moving in the direction of arrow 332, which is toward a collapsed position. FIG. 21G shows latch 310 rotated sufficiently to prevent interference with stop 320, and thus allow legs 108, 110 to collapse toward table top 102. The torsion spring 314 provides the opposing torque on latch 310 as it is pushed backward over stop 320.

## Claims

1. A table (100) comprising:
a table top (102) having a top surface (104) and a bottom surface (106);
a first leg (108) having a top end (112) and a bottom end (114), and a pivot (116) located between the top end (112) and the bottom end (114);
the first leg (108) having a compartmentalized sleeve component (202, 124) and an extension section (128);
a second leg (110) having a top end (118) and a bottom end (120), and a pivot (122) located between the top end (118) and the bottom end (120);
the second leg (110) having a compartmentalized sleeve component (202, 126) and an extension section (130);
the first leg top end (112) fixedly attached to the table top bottom surface (106);
the second leg top end (118) slidably attached to the table top bottom surface (106);
a pivot apparatus (208) configured to attach the first leg (108) to the second leg (110) at the first leg pivot (116) and the second leg pivot (122);
the first leg compartmentalized sleeve component (202, 124) divided longitudinally into a first space (204) and an adjacent second space (206);
the second leg compartmentalized sleeve component (202, 126) divided longitudinally into a first space (204) and an adjacent second space (206);
the first leg extension section (128) beginning at the first leg bottom end (114) and dimensioned to telescope into the first leg first space (204);
the second leg extension section (130) beginning at the second leg bottom end (120) and dimensioned to telescope into the second leg first space (204); and
the pivot apparatus (208) extending into the first leg second space (206) and the second leg second space (206);
**characterized in further comprising**
a range limiter assembly (300) comprising:
a stop (320) affixed to the underside of the table top (102);
a rotatable latch (310);
the rotatable latch (310) connected to the extension section (130) of the second leg (110) and configured to either engage with or clear the stop (320) when the extension section (130) is extended from the sleeve section (126).

2. The table (100) of claim 1 comprising:
a track (146) attached to the bottom surface (106) of the table top (102);
a first wheel (148) attached to the second leg top end (118) configured to allow the second leg (110) to slide along the table top bottom surface (106);
a second wheel (150) laterally opposite the first wheel (148) attached to the second leg top end (118) and disposed within the track (146) and slidable along the track (146);
a pull bar (152) to which the second wheel (150) is rotationally attached;
a compression spring (154) having a first end (156) and a second end (158);
the spring first end (156) fixedly attached to the table top bottom surface (106) or an extension therefrom; and
the spring second end (158) fixedly attached to the pull bar (152), thereby forcing the spring (154) to compress when the table (100) is collapsed and extended as the table (100) is raised.

3. The table (100) of claim 1 further comprising a locking and release mechanism to secure the table (100) in a folded position, the locking and release mechanism comprising:
a storage catch (160) having a hook (162) pivotably attached to the table top (102);
an indent (164) in the first leg bottom (114) complementary to the storage catch (160) hook;
the storage catch (160) biased to engage the first leg bottom indent (164);
a shuttle (166) slidable in the locking and release mechanism from a first position engaging the storage catch (160) and countering the bias of the storage catch (160) toward the first leg bottom indent (164) to unlock the first leg bottom (114), and a second position away from the storage catch (160) so as not to affect the bias of the storage catch (160) toward the first leg bottom indent (164);
the shuttle (166) having an angled surface (168);
a release lever (170) movable toward and away from the table top (102) and engaged with the shuttle angled surface (168) so as to force the shuttle (166) to move or away from the storage catch (160) according to the engagement position of the release lever (170) with respect to the shuttle (166).

4. The table (100) of claim 3 wherein the locking and release mechanism further comprises:
a release rod (172);
the release rod (172) configured to release a gas spring release component to allow the gas spring (154) to expand, thereby elevating the table (100).

5. The table (100) of claim 1 further comprising:
a telescoping leg locking mechanism in each of the first leg (108) and the second leg (110), the telescoping leg locking mechanism having:
a lock housing (174) disposed within each leg extension section (128, 130);
a connecting rod (176) engaged at a first end (178) with a leg extension release lever (180) and engaged at a second end (182) with the lock housing (174) or components therein; and
a pair of opposing pins (184A, 184B) extendable laterally through the lock housing (174) and configured to engage with openings (186) in the leg compartmentalized sleeve component (124, 126) to lock the leg extension section (128, 130) at a fixed height;
wherein, when depressed, the leg extension release lever (180) withdraws the pins (184A, 184B) from the openings (186), thereby allowing the leg extension sections (128, 130) to slide within the leg compartmentalized sleeve component (124, 126).

6. The table (100) of claim 5 comprising:
a pin guide (188) extending from the connecting rod (176);
the pin guide (188) having opposing slots (190A, 190B) angled with respect to longitudinal side of the extension leg component (128, 130); and
a spring (192) disposed around the connecting rod (176) within the lock housing (174) and contained within the lock housing (174) by a housing wall, the spring (192) biasing the pin guide (188) to force the pins (184A, 184B) into the openings (186) of the compartmentalized sleeve component (124, 126);
wherein the release lever (180) is configured to compress the spring (182) thereby withdrawing the pins (184A, 184B) from the openings (186).

7. The table (100) of claim 1 wherein the pivot apparatus (208) comprises:
a nut (210) positioned within the second enclosed space (206) of each leg (108, 110);
a male and female pivot component (212A, 212B), wherein one of the male and female pivot components (212A, 212B) is positioned outside of the second enclosed space (206) of one of the first leg (108) and second leg (110), and the other of the male and female pivot components (212A, 212B) is positioned on the outside of the other of the first leg (108) and second leg (110);
the male and female pivot components (212A, 212B) secured to the nuts (210).

8. The table (100) of claim 7 further comprising a pivot housing (140), the pivot housing (140) having:
a first leg pivot component (142) having an opening through which the first leg compartmentalized sleeve component (124) is disposed; and
a second leg pivot component (144) having an opening through which the second leg compartmentalized sleeve component (126) is disposed;
wherein the first leg pivot component (142) is rotatably attached to the second leg pivot component (144).

9. The table (100) of claim 8 wherein each leg extension section (128, 130) is extendable within its associated compartmentalized sleeve component (124, 126) past the pivot apparatus (208).

## Patentansprüche

1. Ein Tisch (100), umfassend:
eine Tischplatte (102) mit einer oberen Fläche (104) und einer unteren Fläche (106);
ein erstes Bein (108) mit einem oberen Ende (112) und einem unteren Ende (114) und einem Drehgelenk (116), das zwischen dem oberen Ende (112) und dem unteren Ende (114) angeordnet ist;
das erste Bein (108) eine unterteilte Hülsenkomponente (202, 124) und einen Verlängerungsabschnitt (128) aufweisend;
ein zweites Bein (110) mit einem oberen Ende (118) und einem unteren Ende (120) und einem Drehgelenk (122), das zwischen dem oberen Ende (118) und dem unteren Ende (120) angeordnet ist;
das zweite Bein (110) eine unterteilte Hülsenkomponente (202, 126) und einen Verlängerungsabschnitt (130) aufweisend;
das obere Ende des ersten Beins (112) fest an der unteren Fläche (106) der Tischplatte angebracht;
das obere Ende des zweiten Beins (118) verschiebbar an der unteren Fläche (106) der Tischplatte angebracht;
eine Schwenkvorrichtung (208), so konfiguriert, dass sie das erste Bein (108) mit dem zweiten Bein (110) über das Drehgelenk (116) des ersten Beins und das Drehgelenk (122) des zweiten Beins befestigt;
die unterteilte Hülsenkomponente (202, 124) des ersten Beins, in Längsrichtung in einen ersten Raum (204) und einen angrenzenden zweiten Raum (206) unterteilt;
die unterteilte Hülsenkomponente (202, 126) des zweiten Beins, in Längsrichtung in einen ersten Raum (204) und einen angrenzenden zweiten Raum (206) unterteilt;
der Verlängerungsabschnitt (128) des ersten Beins, am unteren Ende des ersten Beins (114) beginnend und so dimensioniert, dass er in den ersten Raum des ersten Beins (204) hinein verschoben werden kann;
der Verlängerungsabschnitt (130) des zweiten Beins am unteren Ende des zweiten Beins (120) beginnend und so dimensioniert, dass er in den ersten Raum des zweiten Beins (204) hinein verschoben werden kann; und
die Schwenkvorrichtung (208) sich in den zweiten Raum des ersten Beins (206) und den zweiten Raum des zweiten Beins (206) erstreckend;
**gekennzeichnet, durch ferner umfassend:**
eine Bereichsbegrenzungsanordnung (300), umfassend:
einen Anschlag (320), der an der Unterseite der Tischplatte (102) befestigt ist;
eine drehbare Verriegelung (310);
die drehbare Verriegelung (310) mit dem Verlängerungsabschnitt (130) des zweiten Beins (110) verbunden und so konfiguriert, dass sie entweder mit dem Anschlag (320) in Eingriff kommt oder diesen freigibt, wenn der Verlängerungsabschnitt (130) aus dem Hülsenabschnitt (126) ausgefahren wird.

2. Der Tisch (100) nach Anspruch 1 umfassend:
eine Schiene (146), die an der Unterseite (106) der Tischplatte (102) angebracht ist;
ein erstes Rad (148), das am oberen Ende des zweiten Beins (118) angebracht ist und so konfiguriert ist, dass das zweite Bein (110) entlang der Unterseite (106) der Tischplatte gleiten kann;
ein dem ersten Rad (148) seitlich gegenüberliegendes zweites Rad (150), das am oberen Ende des zweiten Beins (118) angebracht ist und innerhalb der Schiene (146) angeordnet ist und entlang der Schiene (146) gleiten kann;
eine Zugstange (152), an der das zweite Rad (150) drehbar angebracht ist;
eine Druckfeder (154) mit einem ersten Ende (156) und einem zweiten Ende (158);
das erste Ende (156) der Feder fest an der Unterseite (106) der Tischplatte oder einer Verlängerung davon angebracht; und
das zweite Ende (158) der Feder fest an der Zugstange (152) angebracht, wodurch die Feder (154) zusammengedrückt wird, wenn der Tisch (100) zusammengeklappt wird, und sich ausdehnt, wenn der Tisch (100) angehoben wird.

3. Der Tisch (100) nach Anspruch 1 ferner einen Verriegelungs- und Freigabemechanismus umfassend, um den Tisch (100) in einer zusammengeklappten Position zu sichern, der Verriegelungs- und Freigabemechanismus umfassend:
ein Lagerungsbügel (160) mit einem Haken (162), der schwenkbar an der Tischplatte (102) angebracht ist;
eine Vertiefung (164) in der Unterseite des ersten Beins, die zu dem Haken des Lagerungsbügels (160) komplementär ist;
der Lagerungsbügel (160) so vorgespannt, dass er in die Vertiefung (164) in der Unterseite des ersten Beins eingreift;
ein Shuttle (166), das in dem Verriegelungs- und Freigabemechanismus aus einer ersten Position, in der es mit dem Lagerungsbügel (160) in Eingriff steht und der Vorspannung des Lagerungsbügels (160) in Richtung der Vertiefung (164) in der Unterseite des ersten Beins entgegenwirkt, verschiebbar ist, um das untere Ende des ersten Beins (114) zu entriegeln, und einer zweiten Position, die von dem Lagerungsbügel (160) entfernt ist, verschiebbar ist, um die Neigung des Lagerungsbügels (160) in Richtung der Vertiefung (164) in der Unterseite des ersten Beins nicht zu beeinflussen;
das Shuttle (166) eine abgewinkelte Oberfläche (168) aufweisend;
einen Freigabehebel (170), der zur Tischplatte (102) hin und von dieser weg bewegbar ist und mit der abgewinkelten Oberfläche (168) des Shuttles in Eingriff steht, um das Shuttle (166) zu zwingen, sich von dem Lagerungsbügel (160) weg oder zu dieser hin zu bewegen, entsprechend der Eingriffsposition des Freigabehebels (170) in Bezug auf das Shuttle (166).

4. Der Tisch (100) nach Anspruch 3, der Verriegelungs- und Freigabemechanismus ferner umfassend:
eine Freigabestange (172);
die Freigabestange (172) so konfiguriert, dass sie eine Gasfeder-Freigabekomponente freigibt, damit sich die Gasfeder (154) ausdehnen kann, wodurch der Tisch (100) angehoben wird.

5. Der Tisch (100) nach Anspruch 1, ferner umfassend:
einen Teleskopbein-Verriegelungsmechanismus in jeweils dem ersten Bein (108) und dem zweiten Bein (110), der Teleskopbein-Verriegelungsmechanismus umfassend:
ein Verriegelungsgehäuse (174), das in jedem Beinverlängerungsabschnitt (128, 130) angeordnet ist;
eine Verbindungsstange (176), die an einem ersten Ende (178) mit einem Beinverlängerungs-Freigabehebel (180) in Eingriff steht und an einem zweiten Ende (182) mit dem Verriegelungsgehäuse (174) oder Komponenten darin in Eingriff steht; und
ein Paar gegenüberliegender Stifte (184A, 184B), die seitlich durch das Verriegelungsgehäuse (174) ausfahrbar und so konfiguriert sind, dass sie in Öffnungen (186) in der unterteilten Hülsenkomponente (124, 126) des Beins eingreifen, um den Beinverlängerungsabschnitt (128, 130) auf einer festen Höhe zu verriegeln;
wobei der Beinverlängerungs-Freigabehebel (180) beim Herunterdrücken die Stifte (184A, 184B) aus den Öffnungen (186) zurückzieht, wodurch die Beinverlängerungsabschnitte (128, 130) in der unterteilten Hülsenkomponente (124, 126) des Beins gleiten können.

6. Der Tisch (100) nach Anspruch 5 umfassend:
eine Stiftführung (188), die sich von der Verbindungsstange (176) erstreckt;
die Stiftführung (188) gegenüberliegende Schlitze (190A, 190B) aufweisend, die in Bezug auf die Längsseite der Beinverlängerungskomponente (128, 130) abgewinkelt sind; und
eine Feder (192), die um die Verbindungsstange (176) innerhalb des Verriegelungsgehäuses (174) angeordnet ist und innerhalb des Verriegelungsgehäuses (174) durch eine Gehäusewand gehalten wird, die Feder (192) die Stiftführung (188) vorspannend, um die Stifte (184A, 184B) in die Öffnungen (186) der unterteilten Hülsenkomponente (124, 126) zu treiben;
wobei der Freigabehebel (180) so konfiguriert ist, dass er die Feder (182) zusammendrückt und dadurch die Stifte (184A, 184B) aus den Öffnungen (186) herauszieht.

7. Der Tisch (100) nach Anspruch 1, wobei die Schwenkvorrichtung (208) umfasst:
eine Mutter (210), die innerhalb des zweiten umschlossenen Raums (206) jedes Beins (108, 110) angeordnet ist;
eine männliche und eine weibliche Drehkomponente (212A, 212B), wobei eine der männlichen und weiblichen Drehkomponenten (212A, 212B) außerhalb des zweiten umschlossenen Raums (206) von einem des ersten Beins (108) oder des zweiten Beins (110) positioniert ist und die andere von der männlichen und weiblichen Drehkomponente (212A, 212B) an der Außenseite des anderen des ersten Beins (108) und des zweiten Beins (110) positioniert ist;
die männlichen und weiblichen Drehkomponenten (212A, 212B) an den Muttern (210) befestigt sind.

8. Der Tisch (100) nach Anspruch 7 ferner ein Schwenkgehäuse (140) umfassend, das Schwenkgehäuse (140) aufweisend:
eine Drehkomponente (142) des ersten Beins mit einer Öffnung, durch die die unterteilte Hülsenkomponente (124) des ersten Beins angeordnet ist; und
ein Drehkomponente (144) des zweiten Beins mit einer Öffnung, durch die die unterteilte Hülsenkomponente (126) des zweiten Beins angeordnet ist;
wobei die Drehkomponente (142) des ersten Beins drehbar an der Drehkomponente (144) des zweiten Beins angebracht ist.

9. Der Tisch (100) nach Anspruch 8, wobei jeder Beinverlängerungsabschnitt (128, 130) innerhalb seiner zugehörigen unterteilten Hülsenkomponente (124, 126) über die Schwenkvorrichtung (208) hinaus verlängerbar ist.

## Revendications

1. Table (100) comprenant :
un plateau de table (102) ayant une surface supérieure (104) et une surface inférieure (106) ;
un premier pied (108) ayant une extrémité supérieure (112) et une extrémité inférieure (114), et un pivot (116) situé entre l'extrémité supérieure (112) et l'extrémité inférieure (114) ;
le premier pied (108) ayant un composant de manchon compartimenté (202, 124) et une section d'extension (128) ;
un second pied (110) ayant une extrémité supérieure (118) et une extrémité inférieure (120), et un pivot (122) situé entre l'extrémité supérieure (118) et l'extrémité inférieure (120) ;
le second pied (110) ayant un composant de manchon compartimenté (202, 126) et une section d'extension (130) ;
l'extrémité supérieure de premier pied (112) étant fixée à demeure à la surface inférieure de plateau de table (106) ;
l'extrémité supérieure de second pied (118) étant fixée de manière coulissante à la surface inférieure de plateau de table (106) ;
un appareil de pivot (208) configuré pour fixer le premier pied (108) au second pied (110) au niveau du pivot de premier pied (116) et du pivot de second pied (122) ;
le composant de manchon compartimenté de premier pied (202, 124) étant divisé longitudinalement en un premier espace (204) et un second espace adjacent (206) ;
le composant de manchon compartimenté de second pied (202, 126) étant divisé longitudinalement en un premier espace (204) et un second espace adjacent (206) ;
la section d'extension de premier pied (128) commençant à l'extrémité inférieure de premier pied (114) et dimensionnée pour s'emboîter dans le premier espace de premier pied (204) ;
la section d'extension de second pied (130) commençant à l'extrémité inférieure de second pied (120) et dimensionnée pour s'emboîter dans le premier espace de second pied (204) ; et
l'appareil de pivot (208) s'étendant dans le second espace de premier pied (206) et le second espace de second pied (206) ;
**caractérisée en ce qu'**elle comprend en outre
un ensemble limiteur d'étendue (300) comprenant :
une butée (320) arrimée au dessous du plateau de table (102) ;
un loquet rotatif (310) ;
le loquet rotatif (310) étant connecté à la section d'extension (130) du second pied (110) et configuré pour venir en prise avec la butée (320), ou dégager celle-ci, lorsque la section d'extension (130) est déployée à partir de la section de manchon (126).

2. Table (100) selon la revendication 1 comprenant :
un rail (146) fixé à la surface inférieure (106) du plateau de table (102) ;
une première roue (148) fixée à l'extrémité supérieure de second pied (118) configurée pour permettre au second pied (110) de coulisser le long de la surface inférieure de plateau de table (106) ;
une seconde roue (150) opposée latéralement à la première roue (148) fixée à l'extrémité supérieure de second pied (118) et disposée à l'intérieur du rail (146) et pouvant coulisser le long du rail (146) ;
une barre de traction (152) à laquelle la seconde roue (150) est fixée en rotation ;
un ressort de compression (154) ayant une première extrémité (156) et une seconde extrémité (158) ;
la première extrémité de ressort (156) étant fixée à demeure à la surface inférieure de plateau de table (106) ou à une extension de celle-ci ; et
la seconde extrémité de ressort (158) étant fixée à demeure à la barre de traction (152), forçant ainsi le ressort (154) à se comprimer lorsque la table (100) est repliée et à se déployer lorsque la table (100) est soulevée.

3. Table (100) selon la revendication 1, comprenant en outre un mécanisme de verrouillage et de déverrouillage pour maintenir la table (100) dans une position pliée, le mécanisme de verrouillage et de déverrouillage comprenant :
un cliquet de rangement (160) ayant un crochet (162) fixé de manière pivotante au plateau de table (102) ;
une indentation (164) dans le fond de premier pied (114) complémentaire du crochet du cliquet de rangement (160) ;
le cliquet de rangement (160) sollicité pour mettre en prise l'indentation (164) du fond de premier pied ;
une navette (166) pouvant coulisser dans le mécanisme de verrouillage et de déverrouillage à partir d'une première position mettant en prise le cliquet de rangement (160) et contrant la sollicitation du cliquet de rangement (160) vers l'indentation (164) du fond de premier pied pour déverrouiller le fond de premier pied (114), et une seconde position éloignée du cliquet de rangement (160) afin de ne pas affecter la sollicitation du cliquet de rangement (160) vers l'indentation (164) du fond de premier pied ;
la navette (166) ayant une surface inclinée (168) ;
un levier de déverrouillage (170) mobile vers et au loin du plateau de table (102) et en prise avec la surface inclinée (168) de la navette de manière à amener la navette (166) à se déplacer ou à s'éloigner du cliquet de rangement (160) en fonction de la position de prise du levier de déverrouillage (170) par rapport à la navette (166).

4. Table (100) selon la revendication 3, dans laquelle le mécanisme de verrouillage et de déverrouillage comprend en outre :
une tige de déverrouillage (172) ;
la tige de déverrouillage (172) étant configurée pour déverrouiller un composant de déverrouillage de ressort à gaz afin de permettre au ressort à gaz (154) de s'étendre, en relevant ainsi la table (100).

5. Table (100) selon la revendication 1 comprenant en outre :
un mécanisme de verrouillage de pied télescopique dans chacun des premier pied (108) et second pied (110), le mécanisme de verrouillage de pied télescopique ayant :
un boîtier de verrou (174) disposé à l'intérieur de chaque section d'extension de pied (128, 130) ;
une bielle (176) en prise à une première extrémité (178) avec un levier de déverrouillage d'extension de pied (180) et en prise à une seconde extrémité (182) avec le boîtier de verrou (174) ou des composants dans celui-ci ; et
une paire de goupilles opposées (184A, 184B) extensibles latéralement à travers le boîtier de verrou (174) et configurées pour venir en prise avec des ouvertures (186) dans le composant de manchon compartimenté de pied (124, 126) pour verrouiller la section d'extension de pied (128, 130) à une hauteur fixe ;
dans laquelle, lorsqu'il est enfoncé, le levier de déverrouillage d'extension de pied (180) retire les goupilles (184A, 184B) des ouvertures (186), permettant ainsi aux sections d'extension de pied (128, 130) de coulisser à l'intérieur du composant de manchon compartimenté de pied (124, 126).

6. Table (100) selon la revendication 5 comprenant :
un guide de goupilles (188) s'étendant depuis la bielle (176) ;
le guide de goupilles (188) ayant des fentes opposées (190A, 190B) inclinées par rapport à un côté longitudinal du composant de pied d'extension (128, 130) ; et
un ressort (192) disposé autour de la bielle (176) à l'intérieur du boîtier de verrou (174) et contenu à l'intérieur du boîtier de verrou (174) par une paroi de boîtier, le ressort (192) sollicitant le guide de goupilles (188) pour pousser les goupilles (184A, 184B) dans les ouvertures (186) du composant de manchon compartimenté (124, 126) ;
dans laquelle le levier de déverrouillage (180) est configuré pour comprimer le ressort (182), retirant ainsi les goupilles (184A, 184B) des ouvertures (186).

7. Table (100) selon la revendication 1, dans laquelle l'appareil de pivot (208) comprend :
un écrou (210) positionné à l'intérieur du second espace clos (206) de chaque pied (108, 110) ;
des composants de pivot mâle et femelle (212A, 212B), dans laquelle l'un des composants de pivot mâle et femelle (212A, 212B) est positionné à l'extérieur du second espace clos (206) de l'un des premier pied (108) et second pied (110), et l'autre des composants de pivot mâle et femelle (212A, 212B) est positionné sur l'extérieur de l'autre des premier pied (108) et second pied (110) ;
les composants de pivot mâle et femelle (212A, 212B) étant attachés aux écrous (210).

8. Table (100) selon la revendication 7 comprenant en outre un boîtier de pivot (140), le boîtier de pivot (140) ayant :
un composant de pivot de premier pied (142) ayant une ouverture à travers laquelle le composant de manchon compartimenté de premier pied (124) est disposé ; et
un composant de pivot de second pied (144) ayant une ouverture à travers laquelle le composant de manchon compartimenté de second pied (126) est disposé ;
dans laquelle le composant de pivot de premier pied (142) est fixé de manière rotative au composant de pivot de second pied (144).

9. Table (100) selon la revendication 8, dans laquelle chaque section d'extension de pied (128, 130) est extensible à l'intérieur de son composant de manchon compartimenté associé (124, 126) au-delà de l'appareil de pivot (208).
